# EUROPEAN PATENT APPLICATION

(11) **EP 4 290 339 A1**
(43) Date of publication of application: **13.12.2023**
(21) Application number: 22774280.6
(22) Date of filing: 23.03.2022
(51) Int. Cl.: G06F 3/01

(54) **METHOD FOR CONTROLLING WEARABLE DEVICE, AND WEARABLE DEVICE**

(30) Priority: 25.03.2021 CN 202110321977
(71) Applicant: Huawei Technologies Co., Ltd., Shenzhen, Guangdong 518129 (CN)
(72) Inventor: WANG, Yaoyuan, Shenzhen, Guangdong 518129 (CN); LIU, Chang, Shenzhen, Guangdong 518129 (CN); LU, Yuewan, Shenzhen, Guangdong 518129 (CN); GAO, Wenmei, Shenzhen, Guangdong 518129 (CN); HU, Hongwei, Shenzhen, Guangdong 518129 (CN)
(74) Representative: Pfenning, Meinig & Partner mbB
(86) International application number: PCT/CN2022/082540
(87) International publication number: WO 2022/199624

(57) **Abstract**

Embodiments of this application relate to a method for controlling a wearable device and a wearable device. The method includes: detecting an abnormal touch event on a display screen of the wearable device; and if the wearable device is worn on an arm of a user, enabling gesture recognition in response to the detected abnormal touch event. According to this application, in the method, the wearable device can be effectively controlled when there is a touch exception on the wearable device, so that interaction with the wearable device can be conveniently performed.

## Description

This application claims priority to Chinese Patent Application No. 202110321977.3, filed with the China National Intellectual Property Administration on March 25, 2021 and entitled "METHOD FOR CONTROLLING WEARABLE DEVICE AND WEARABLE DEVICE", which is incorporated herein by reference in its entirety.

### TECHNICAL FIELD

This application relates to the field of wearable devices, and in particular, to a method for controlling a wearable device and a wearable device.

### BACKGROUND

Today, wearable devices are increasingly popular. People may wear various types of wearable devices in daily life, for example, wearable watches, wearable glasses, or wearable helmets. In addition to displaying time, the wearable devices, for example, the wearable watches, may further implement functions such as making and answering a call, playing music, or performing payment. In use, when wearing a wearable watch, a user may control the wearable device by touching a display screen of the wearable watch, and interact with the wearable watch. However, there is a water stain or a stain on the display screen of the wearable watch, or there is a dirty object such as a liquid on a finger of the user, or the user performs an improper operation. As a result, when the user touches the display screen of the wearable watch to operate the watch, the wearable watch does not respond, and the user cannot interact with the wearable watch effectively.

### SUMMARY

In view of this, a method for controlling a wearable device and a wearable device are proposed, so that the wearable device can be effectively controlled when there is a touch exception on the wearable device, and interaction with the wearable device can be conveniently performed.

According to a first aspect, embodiments of this application provide a method for controlling a wearable device. The method includes: detecting an abnormal touch event on a display screen of the wearable device; and if the wearable device is worn on an arm of a user, enabling gesture recognition in response to the detected abnormal touch event.

Based on the method for controlling a wearable device in the embodiments of this application, the gesture recognition can be automatically enabled after the abnormal touch event is detected on the display screen, so that the wearable device can be directly and effectively controlled when there is a touch exception on the wearable device, thereby improving user experience.

According to a possible implementation of the first aspect, after the enabling gesture recognition, the method further includes: recognizing a first user gesture made by the user; and performing a first operation corresponding to the first user gesture.

In embodiments of this application, after the enabling gesture recognition, the wearable device can perform a specific operation (that is, the first operation) based on the recognized user gesture (that is, the first user gesture), to effectively control the wearable device.

According to a possible implementation of the first aspect, the abnormal touch event indicates that an abnormal event exists on a touch point and/or a touch track detected on the display screen.

In embodiments of this application, when all touch points and/or touch tracks in a touch operation performed by the user on the display screen of the wearable device are normal, the wearable device may perform various operations under control of the user. However, if the wearable device does not respond to the touch operation of the user or the touch fails (for example, the screen frequently jumps), use of the user is affected. To effectively control the wearable device when there is an abnormal touch on the wearable device, in embodiments of this application, an abnormal touch operation is limited, so that the wearable device can quickly recognize the abnormal touch operation based on the limitation on the abnormal touch operation, thereby automatically enabling gesture recognition in a timely manner.

According to a possible implementation of the first aspect, an initial state of the first user gesture is an initial action starting from a preset tilt angle relative to a horizontal plane. In addition, the first user gesture is that the wearable device is worn on the arm of the user, and may be an initial action starting from a preset tilt angle of the arm of the user relative to the horizontal plane. For example, the first user gesture may be a gesture made when the arm of the user is in a horizontal state.

In embodiments of this application, the wearable device may preset the initial state of the first user gesture. In this way, the wearable device may perform subsequent gesture recognition after recognizing the initial state. If the initial state of the wearable device does not conform to a preset initial state, recognition of the user gesture is stopped. In this way, recognition efficiency of the wearable device is improved, and unnecessary recognition operations are reduced.

According to a possible implementation of the first aspect, after the enabling gesture recognition, the method further includes recognizing a second user gesture made by the user. The second user gesture is different from the first user gesture, and an initial state of the second user gesture is an initial action starting from the same preset tilt angle as the initial state of the first user. The method further includes performing a second operation corresponding to the second user gesture.

In embodiments of this application, the wearable device may perform different operations for different user gestures. The wearable device may set the initial state of the first user gesture and the initial state of the second user gesture to be a same gesture. In this way, the wearable device may specifically recognize each gesture after determining that the user gesture made by the user conforms to the initial state, thereby improving recognition efficiency of the wearable device.

According to a possible implementation of the first aspect, after the enabling gesture recognition, the method further includes: determining whether a preset user gesture is recognized within a preset time period, and the preset user gesture includes the first user gesture; and exiting the gesture recognition if the preset user gesture is not recognized within the preset time period.

In embodiments of this application, after the wearable device detects the abnormal touch event and enables gesture recognition in response to the abnormal touch event, the user may not want to perform any operation on the wearable device. However, if the wearable device continuously enables gesture recognition, a burden is caused to the wearable device. Therefore, in the method, it may be determined whether the preset user gesture is recognized within the preset time period for enabling gesture recognition, and the gesture recognition is exited if the preset user gesture is not recognized, thereby effectively reducing power consumption of the wearable device.

According to a possible implementation of the first aspect, before the recognizing a first user gesture made by the user, the method further includes: calculating a tilt angle of the wearable device relative to the horizontal plane by using acceleration data; determining whether the tilt angle falls within a preset tilt angle range; and recognizing the first user gesture if the tilt angle falls within the preset tilt angle range.

In embodiments of this application, the wearable device may further determine, after enabling gesture recognition, whether the initial state of the wearable device is correct using the acceleration data. If the initial state is incorrect, the gesture recognition is directly exited, and a specific user gesture is recognized after the initial action is correct. In this manner, a gesture made by the user can be preliminarily screened, and only a valid gesture is recognized, thereby reducing a calculation amount of the wearable device.

According to a possible implementation of the first aspect, the recognizing a first user gesture made by the user includes: determining, based on ambient light data, a gesture recognition algorithm for recognizing the first user gesture; and recognizing the first user gesture by using the determined gesture recognition algorithm.

In embodiments of this application, the ambient light data may help determine whether light of a wearing environment of the wearable device is robust, and the wearable device may use different gesture recognition algorithms based on different light of the wearing environment, thereby improving accuracy of gesture recognition.

According to a possible implementation of the first aspect, the determining, based on ambient light data, a gesture recognition algorithm for recognizing the first user gesture includes: determining whether the ambient light data is greater than a preset threshold; and if the ambient light data is greater than the preset threshold, recognizing the first user gesture by using a gesture recognition algorithm that is based on ambient light data and acceleration data; or if the ambient light data is lower than the preset threshold, recognizing the first user gesture by using a gesture recognition algorithm that is based on photo plethysmo graphic data and acceleration data.

In embodiments of this application, the wearable device may determine, based on the ambient light data, whether the light of the wearing environment of the wearable device is robust, and then use different gesture recognition algorithms based on the different light. When the light is not robust, the wearable device may recognize the first user gesture by using the gesture recognition algorithm that is based on ambient light data and acceleration data. When the light is robust, the wearable device recognizes the first user gesture by using the gesture recognition algorithm that is based on photo plethysmo graphic data and acceleration data, thereby improving accuracy of gesture recognition. To determine whether the light is robust in a quantitative manner, the wearable device may determine different gesture recognition algorithms using the ambient light data.

According to a possible implementation of the first aspect, the method further includes: determining whether photo plethysmo graphic data falls within a preset range; and if the photo plethysmo graphic data falls within the preset range, determining that the wearable device is worn by the user on the arm.

In embodiments of this application, the wearable device can recognize the gesture made by the user only when the wearable device is worn on the arm of the user. Therefore, the wearable device may determine whether the user wears the wearable device on the arm using the photo plethysmo graphic data, and perform gesture recognition only when the user has already worn the wearable device on the arm.

According to a possible implementation of the first aspect, the first user gesture includes a wrist flip gesture, a fist clenching and unclenching gesture, or a finger rubbing gesture.

In embodiments of this application, the wrist flip gesture, the fist clenching and unclenching gesture, and the finger rubbing gesture are all actions whose initial state is parallel to the horizontal plane, and these actions are actions that are easy to be performed by the user and that are not easy to perform a misoperation. In addition, the wearable device can easily recognize these actions. Therefore, the wearable device may select the first user gesture from these gestures.

According to a possible implementation of the first aspect, the performing a first operation corresponding to the first user gesture includes: when the wearable device displays an incoming call, performing a mute operation, a hang-up operation, or an answer operation on the incoming call.

In embodiments of this application, the wearable device may perform a specific operation using the first user gesture. For example, when the wearable device displays an incoming call, the wearable device sets the specific gesture as a specific operation for the incoming call. For example, the wearable device may perform a mute operation, a hang-up operation, or an answer operation on the incoming call using the first operation.

According to a possible implementation of the first aspect, the performing a first operation corresponding to the first user gesture includes: when the wearable device plays a song, performing a switching operation or a pause operation on the played song. In embodiments of this application, the wearable device may perform a specific operation using the first user gesture. When the wearable device displays a song being played, set the specific gesture as a specific operation for the played song. For example, the wearable device may perform a switching operation or a pause operation on the played song using the first operation.

According to a possible implementation of the first aspect, the performing a first operation corresponding to the first user gesture includes: starting a voice assistant application of the wearable device; or calling a payment interface.

In embodiments of this application, after recognizing a specific gesture (that is, the first user gesture), the wearable device may further start the voice assistant application to control the wearable device, thereby expanding a use scope and an application scenario of this solution. In addition, the wearable device may further perform a specific operation (that is, calling the payment interface) after recognizing the specific gesture (that is, the first user gesture).

According to a second aspect, embodiments of this application provide a wearable device, including: a processor; and a memory, configured to store instructions executable by the processor. When executing the instructions, the processor is configured to perform the method for controlling a wearable device based on the first aspect or one or more of the possible implementations of the first aspect.

The wearable device in the embodiments of this application may automatically enable gesture recognition after detecting an abnormal touch event on a display screen, to directly and effectively control the wearable device when a touch is abnormal, thereby improving user experience.

According to a third aspect, embodiments of this application provide a non-volatile computer-readable storage medium. Computer program instructions are stored on the non-volatile computer-readable storage medium. When the computer program instructions are executed by a processor, the method for controlling a wearable device according to the first aspect or one or more of a plurality of possible implementations of the first aspect is performed.

According to a fourth aspect, embodiments of this application provide a computer program product. When the computer program product is run on a computer, the computer is enabled to perform the method for controlling a wearable device according to the first aspect or one or more of the possible implementations of the first aspect.

These aspects and another aspect of this application will be clearer and easier to understand in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a diagram of an application scenario according to an embodiment of this application;
FIG. 2 is a diagram of an abnormal touch event according to an embodiment of this application;
FIG. 3A is a step flowchart of a method for controlling a wearable device according to an embodiment of this application;
FIG. 3B is a step flowchart of a method for controlling a wearable device according to an embodiment of this application;
FIG. 4 is a diagram of a user gesture according to an embodiment of this application;
FIG. 5 is a diagram of reminding a user to use gesture recognition according to an embodiment of this application;
FIG. 6 is a step flowchart of recognizing a user gesture according to an embodiment of this application;
FIG. 7 is a step flowchart of a specific operation of step S630 in FIG. 6;
FIG. 8 is another step flowchart of a method for controlling a wearable device according to an embodiment of this application; and
FIG. 9 is a schematic structural diagram of a wearable device according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first room and a second room are merely used to distinguish between different rooms, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used to represent giving an example, an illustration, or a description. Any embodiment or design scheme described as an "example" or "for example" in this application should not be construed as being more preferred or having more advantages than another embodiment or design scheme. Exactly, use of the term such as "example" or "for example" is intended to present a relative concept in a specific manner.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

The following describes in detail a method for controlling a wearable device provided in embodiments of this application with reference to the accompanying drawings.

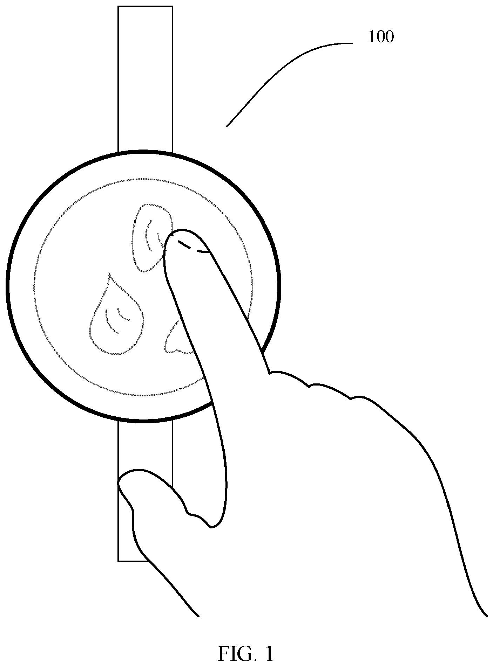

FIG. 1 is a diagram of an application scenario according to an embodiment of this application. The method for controlling a wearable device provided in embodiments of this application may be applied to a wearable device 100 shown in FIG. 1. The wearable device 100 may indicate a wristband-type wearable device, including a smartwatch, a smart band, or the like. As shown in FIG. 1, a user may touch/tap a display screen of the wearable device 100 using a finger to control the wearable device 100. In embodiments of this application, the touch (which may also be referred to as a touch control) may indicate a touch performed by a limb (for example, a finger) of the user.

In use, because there are a plurality of water stains 10, 20, and 30 on the display screen of the wearable device 100, the wearable device 100 cannot determine a touch point that is actually touched by the user. During implementation, in this case, the wearable device 100 may use all touches (for example, water stains that are mistakenly considered as touches) as touch events input by the user, and then run operations corresponding to these touch events. This may cause a screen of the wearable device to frequently jump. For example, when the water stains 10, 20, and 30 are mistakenly considered as touch events, the wearable device 100 needs to display application interfaces (that is, three application interfaces) corresponding to the water stains 10, 20, and 30 and an application interface displayed by an actual touch of the user. As a result, the display screen of the wearable device frequently switches to display these interfaces.

As another example, to prevent the user from performing an accidental touch, the wearable device 100 may preset an event with a plurality of touch points as an accidental touch event, and is set not to respond to the accidental touch event. In this case, the wearable device 100 may display as a touch failure or no response to touch. That is, as shown in FIG. 1, the user touches the display screen of the wearable device 100 using a finger, but the wearable device does not respond.

The foregoing processing manners may cause inconvenience to the user. For example, when the user wears the wearable device 100, the wearable device 100 is inevitably in contact with water or stains. For example, the user may swim or take a bath while wearing the wearable device 100. For another example, the user encounters rainy weather when wearing the wearable device 100 for outdoor activities. Particularly, in these scenarios, if the user needs to use some services on the wearable device 100 but the user cannot normally use the wearable device due to the foregoing reasons, user experience is poor.

A call is used as an example. When the user wears the wearable device 100 during swimming, the user may need to use the wearable device 100 to answer an incoming call. However, because there is a water stain on the screen of the wearable device 100, the touch of the user fails, and the user cannot answer the call. Alternatively, in a process of wiping the screen, the user uses a wiping operation as a touch operation, and consequently the incoming call is rejected.

Playing music is used as an example. When the user wears the wearable device 100 in a bath, because there is a water stain on the screen of the wearable device, the water stain may be incorrectly determined by the wearable device 100 as a tap operation, and consequently, a song is frequently switched. Alternatively, when the user expects to tap a pause control to pause playing the song, a touch failure is caused because there are many water stains on the screen.

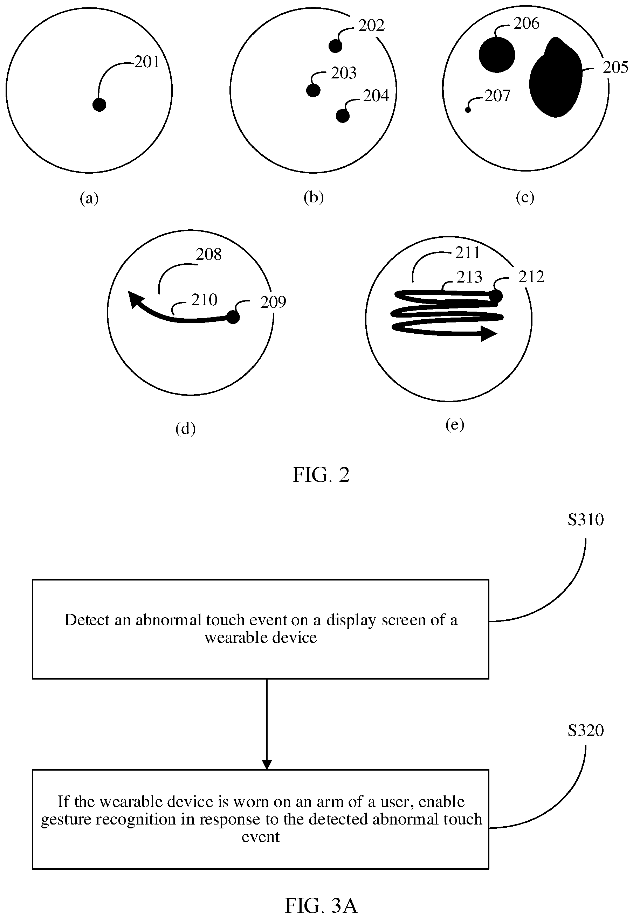

The method for controlling a wearable device in embodiments of this application sets an exception occurring in the foregoing scenario as an abnormal touch event. For ease of understanding the abnormal touch event, the following describes the abnormal touch event in detail with reference to FIG. 2.

FIG. 2 is a diagram of an abnormal touch event according to an embodiment of this application.

The touch operation performed by the user on the wearable device 100 may be classified into a single-point touch and a continuous touch. The following separately describes abnormal touch events for the single-point touch and the continuous touch.

### (1) For a case in which a user performs a single-point touch.

In a normal use scenario, a touch of the user on a display screen is a single-point touch, and a touch point of the single-point touch needs to meet a touch requirement of the single-point touch, where the touch requirement includes two aspects: a touch shape and a touch area of the touch point. The touch point can be referred to as a touch point of a normal single-point touch only when the touch point meets both requirements of the two aspects. A touch shape of the touch point of the normal single-point touch is a quasi-circular shape, including: a quasi-circular shape, including a circle, an ellipse, or an approximate circle. A touch area of a normal touch point means that the touch area of the touch point falls within a set range, and the set range may be a range preset by a skilled person based on experience. Based on this, an abnormal touch event of the single-point touch refers to an event that there is an exception in the touch shape and/or the touch area of the touch point.

As shown in (a) in FIG. 2, both a touch shape and a touch area of a touch point 201 detected by the display screen meet a touch requirement, that is, the touch shape of the touch point 201 is a circle, and the touch area falls within a set range. Therefore, the touch point 201 detected by the display screen is a normal single-point touch. In comparison, as shown in (c) in FIG. 2, a touch shape of a touch point 205 detected by the display screen cannot be approximate to a circle (that is, an abnormal shape), a touch area of a touch point 206 detected by the display screen is much larger than a set area, and a touch area of a touch point 207 detected by the display screen is much smaller than the set area.

In addition, the abnormal touch may further indicate that an abnormal quantity of touch points of a single-point touch that are simultaneously detected exists. A relative concept rather than an absolute concept is also mentioned herein, that is, a time difference that can be ignored may be considered as "simultaneous". As shown in (b) in FIG. 2, the abnormal touch indicates that a plurality of touch points 202, 203, and 204 are simultaneously detected on the display screen.

### (2) For a case in which a user performs a continuous touch.

In a normal use scenario, when the user performs the continuous touch on a display screen, a starting touch point of the continuous touch needs to meet a touch requirement of a single-point touch and a touch track of the continuous touch needs to meet a track requirement. The touch requirement of the single-point touch is as described above. The track requirement of the touch track includes that the touch track does not jitter, and the jitter mentioned herein means that the touch track changes a movement direction back and forth. For a case in which the user performs the continuous touch, an abnormal continuous touch event refers to an abnormal event in terms of the starting touch point and/or a touch path. As shown in (d) in FIG. 2, a continuous touch 208 of the user on the display screen may indicate to continuously touch a route (that is, a touch track) 210 at a starting touch point 209. As shown in (e) in FIG. 2, although a starting touch point 212 of an abnormal continuous touch 211 meets the touch requirement, a touch track 213 has a jitter condition, and therefore does not meet the track requirement.

For the abnormal touch event mentioned in FIG. 2, the method for controlling a wearable device in embodiments of this application may perform the following operations, so that when the abnormal touch event occurs on the wearable device, the user can conveniently and effectively interact with the wearable device, thereby improving user experience.

FIG. 3A is a step flowchart of a method for controlling a wearable device according to an embodiment of this application. The method is performed by the wearable device.

As shown in FIG. 3A, in step S310, an abnormal touch event is detected on a display screen of the wearable device. In embodiments of this application, the abnormal touch event indicates that an abnormal event exists on a touch point and/or a touch track detected on the display screen. The abnormal touch event has been specifically described above with reference to FIG. 2.

During implementation, in the method, after an abnormal touch event is detected, it may be further determined whether duration of the abnormal touch event exceeds a threshold time T1. If the duration of the abnormal touch event exceeds the threshold time T1, in the method, step S320 may be performed; otherwise, no operation is performed.

This is because when a user wears the wearable device, the abnormal touch event in (b) or (c) in FIG. 2 may occur only in a short time because of a water stain or a stain on the display screen, or the abnormal touch event in (e) in FIG. 2 may occur when the user wipes the display screen of the wearable device. Therefore, in the method, whether the abnormal touch event lasts for the threshold time T1 may be determined, to further determine whether the abnormal touch event is a real abnormal touch event that occurs when the user uses the device. There is a high probability that the abnormal touch event affects normal use of the device by the user. In this way, a misoperation may be prevented. Certainly, optionally, to avoid affecting use of the wearable device by the user as much as possible, in the method, a subsequent operation may be directly performed after an abnormal touch event is detected.

In step S320, if the wearable device is worn on an arm of the user, gesture recognition is enabled in response to the detected abnormal touch event.

In embodiments of this application, to recognize a gesture of the user, the method needs to collect related data when the arm of the user wears the wearable device. The arm mentioned in this application includes a forearm of the user, and the wearable device worn on the forearm of the user may include a wearable band, a wearable watch, and the like.

In a possible implementation, in the method, it may be determined whether the user wears the wearable device on the arm of the user using photo plethysmo graphic (photo plethysmo graphic, PPG) data. Specifically, a light emitting diode (light emitting diode, LED) in a PPG sensor of the wearable device emits light to skin, and an optical signal reflected back by a skin tissue is received by a photosensitive sensor and converted into electrical data, and then converted into a digital signal through analog-to-digital conversion. The digital signal is processed to obtain PPG data.

During implementation, the PPG sensor includes a plurality of light emitting diodes. For example, the PPG sensor may include a red light emitting diode, a green light emitting diode, an infrared light emitting diode, and the like. Different light emitting diodes may generate light of different wavelengths, and may use the light of different wavelengths to obtain different digital signals. As an example, the PPG sensor may obtain a digital signal using light emitted by the green light emitting diode, to determine PPG data of whether the user wears the wearable device.

During implementation, in the method, the PPG data may be collected based on a preset frequency, and the collected PPG data is processed into a waveform whose time length is T based on a set step. For example, when T is 2 seconds and the preset frequency is 100 Hz, a data length is 200 sampling points. If the step is set to 0.1 second, that is, if a backward sliding window is performed every 10 sampling points, a waveform with a length of 2 seconds can be generated every 0.1 second.

In this process, due to an error, the waveform may be longer or shorter than 2 seconds. Therefore, the data length may be greater than 200 sampling points or less than 200 sampling points. Based on this, in the method, whether obtained PPG data meets a preset duration may be determined. If the obtained PPG data is greater than the preset duration, only the PPG data of the preset duration may be selected. If the obtained PPG data is less than the preset duration, the PPG data may be increased until the preset duration is met.

Optionally, in the method, band-pass filtering processing may be further performed on the PPG data, to filter out a high frequency component and a low frequency component in the PPG data. Subsequently, in the method an average amplitude of the PPG data as PPG feature data may be calculated. It is determined whether the PPG feature data falls within a specified threshold range. If the PPG feature data falls within the range, it is determined that the wearable device is worn on the arm of the user. If the PPG feature data does not fall within the specified threshold range, it is considered that the user does not wear the wearable device on the arm.

In actual use, there may be the following case: when an abnormal touch event occurs, the user does not wear the wearable device, but the user then wears the wearable device on the arm and expects to control the wearable device. In this case, when it is determined that the PPG feature data does not fall within the threshold range, the foregoing operations may be repeatedly performed at a preset interval (for example, 1 second). When the user already wears the wearable device on the arm, the gesture recognition is enabled in response to the detected abnormal touch event.

In actual use, the following case may further exist: after the wearable device detects an abnormal touch event and enables gesture recognition in response to the abnormal touch event, the user does not want to perform any operation on the wearable device. In this process, the wearable device needs to continuously run the gesture recognition, which increases power consumption of the wearable device. Based on this, in the method, timing may be performed by using a timer after the enabling gesture recognition, and it is determined whether a gesture made by the user is recognized within a threshold time T2. The threshold time T2 is obviously longer than the preset interval mentioned above. For example, the threshold time T2 may be 30 seconds. If the gesture made by the user is not recognized within the threshold time T2, the gesture recognition is exited.

In a possible implementation, the enabling gesture recognition in response to the detected abnormal touch event may include: enabling a gesture recognition service or a gesture recognition function of the wearable device.

In conclusion, based on the method for controlling a wearable device in embodiments of this application, when it is determined that the wearable device is worn on the arm, gesture recognition is enabled after the abnormal touch event is detected, so that the wearable device can be effectively controlled when there is a touch exception on the wearable device. In addition, in the method, whether duration of the abnormal touch event exceeds a threshold time may be determined to obtain an abnormal touch event that has a high probability that affects normal use of a device by a user, thereby effectively preventing a misoperation. Still further, in the method, it may be further determined whether a user gesture is recognized within a preset time period in which gesture recognition is enabled, and the gesture recognition is exited after no user gesture is recognized, thereby effectively reducing unnecessary power consumption of the wearable device.

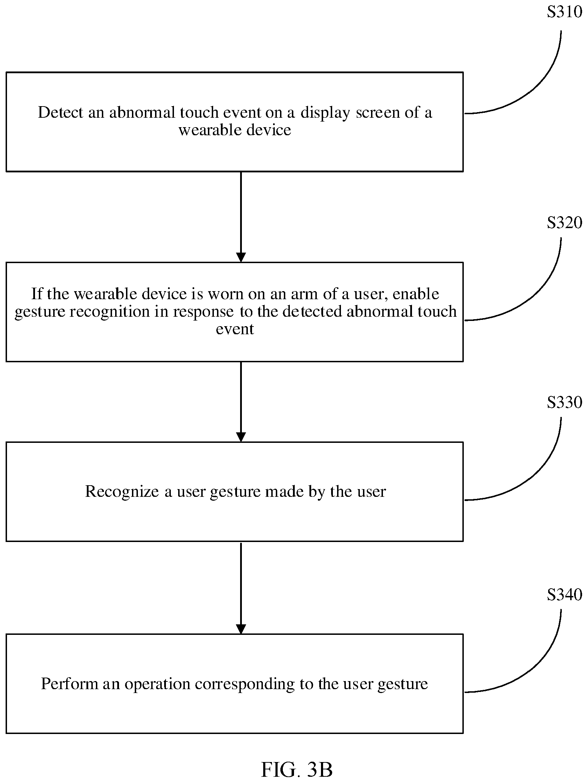

Based on FIG. 3A, FIG. 3B is a step flowchart of a method for controlling a wearable device according to an embodiment of this application.

As shown in FIG. 3B, after enabling gesture recognition in S320, the wearable device may perform step S330 to recognize the user gesture made by the user. In embodiments of this application, the user gesture includes a gesture formed by combining one or more hand movements. Therefore, in a process of recognizing the user gesture made by the user, an initial state of the user may be first recognized, and whether the initial state of the user is a preset initial state is determined.

Based on embodiments of this application, the initial state may indicate an initial action that starts from a preset tilt angle. The preset tilt angle may include an angle between a plane formed by an arm wearing the wearable device and a horizontal plane. During implementation, the preset tilt angle may include 0 degrees, 90 degrees, 180 degrees, or the like. Take 0 degrees as an example. If the preset tilt angle is 0 degrees, the initial state is an initial action performed when the arm of the user is in a horizontal state, for example, the user horizontally opens five fingers, or the user horizontally holds a fist.

During implementation, the user gesture may be a preset user gesture. In other words, the wearable device may preset some specific user gestures, and then recognize the specific user gesture made by the user. To enrich operations of the wearable device, a plurality of user gestures may be preset. For example, the user gesture may include a first user gesture, a second user gesture, and a third user gesture, and the three user gestures are different.

However, to improve accuracy of gesture recognition, initial states of the three user gestures may be set to be the same. That is to say, the initial states of the three user gestures are all initial actions starting from the preset tilt angle relative to the horizontal plane. For example, when the initial states of the foregoing three user gestures are all the initial actions performed by the hand of the user on the horizontal plane, the first user gesture may be a finger rubbing gesture, the second user gesture may be a fist clenching and unclenching gesture, and the third user gesture may be a wrist flip gesture. In an example, that the initial states of the plurality of gestures are the same may also be that the initial actions of the plurality of gestures are the same. For example, the initial action is lifting the arm and leveling the arm (an angle relative to the horizontal plane falls within a preset angle).

During implementation, the wearable device may pre-configure a correspondence between the user gesture and an operation performed by the wearable device. In this way, after the user gesture is recognized in step S330, an operation corresponding to the user gesture may be performed in step S340. In an example, the wearable device may recognize one or more gestures. If the wearable device can recognize a plurality of gestures, different user gestures may correspond to different operations. For example, if the method recognizes a first user gesture made by the user, a first operation corresponding to the first user gesture is performed; or if the method recognizes a second user gesture made by the user, a second operation corresponding to the second user gesture is performed.

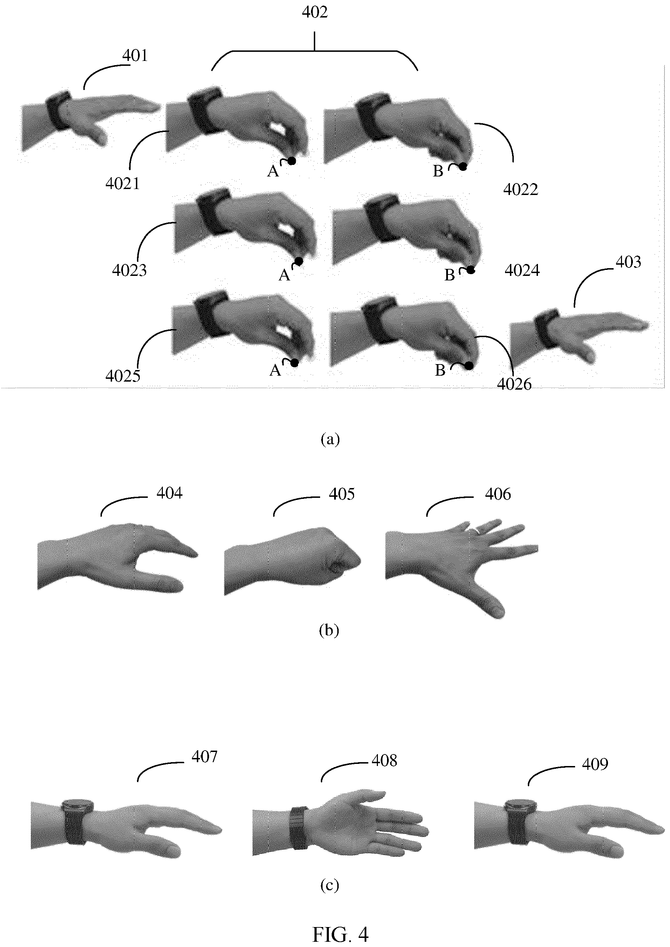

For ease of understanding, the following describes in detail the user gestures mentioned above with reference to FIG. 4. The user gestures may include a finger rubbing gesture, a fist clenching and unclenching gesture, and a wrist flip gesture. Initial states of the three user gestures are all initial actions starting from a same tilt angle. It can be seen from FIG. 4 that the initial states of the three user gestures (that is, a gesture 401, a gesture 404, and a gesture 407) are all initial actions performed when the arm wearing the wearable device is in a horizontal state.

Although the initial states of the finger rubbing gesture (a) in FIG. 4, the fist clenching and unclenching gesture (b) in FIG. 4, and the wrist flip gesture (c) in FIG. 4 are all initial actions in which five fingers are opened naturally and remain unchanged when the arm is in the horizontal state, the three initial actions are not completely the same due to individual differences. In embodiments of this application, the wearable device may consider all initial actions that fall within an acceptable range but have slight differences as a same gesture.

As shown in (a) in FIG. 4, the finger rubbing gesture includes a plurality of hand movements. Specifically, the finger rubbing gesture may include actions in three stages, that is, an initial action, intermediate actions, and an end action. As shown in (a) in FIG. 4, the initial action and the end action are the gesture 401 and a gesture 403, and both are actions in which five fingers are opened naturally and remain unchanged in a horizontal state. As shown in (a) in FIG. 4, intermediate actions 402 may be a combined action, including a gesture 4021 and a gesture 4022. The gesture 4021 may indicate that a fingertip of a thumb is located at a fingertip position (point A) of a middle finger when the four fingers quickly close inward, and the gesture 4022 may indicate that the fingertip of the thumb is quickly sliding from the fingertip position (point A) of the middle finger in the gesture 4021 to a fingertip position (point B) of an index finger. During implementation, the intermediate actions 402 may have different numbers of combined actions depending on the number of slides. The finger rub action shown in (a) in FIG. 4 may rub a finger for three times. Therefore, the intermediate actions 402 include three groups of combined actions, that is, including the gesture 4021, the gesture 4022, a gesture 4023, a gesture 4024, a gesture 4025, and a gesture 4026. The foregoing finger rubbing gesture is merely an example. During implementation, the finger rubbing gesture in embodiments of this application may be set to different hand movements based on a quantity of fingers participating in finger rubbing and a quantity of repetition times in a sliding process. For example, the finger rubbing gesture may also be the following case: The initial action and the end action are that the five fingers are opened naturally and remain unchanged. The intermediate actions are that the three fingers quickly close inward, and the fingertip of the thumb immediately slides to the fingertip of the index finger after the fingertip of the thumb is in contact with the fingertip of the middle finger and the fingertip of the index finger. The sliding process is performed once. In an optional implementation, different finger rubbing gestures may be set as different hand movements, and correspond to different operations.

As shown in (b) in FIG. 4, the fist clenching and unclenching gesture includes a plurality of hand movements. Specifically, the initial action 404 of the fist clenching and unclenching gesture may be that the five fingers are opened naturally and remain unchanged in a horizontal state, an intermediate gesture 405 is a fist that the user quickly clenches, and an end gesture 406 is that the five fingers are opened or relaxed in any relaxed state.

As shown in (c) in FIG. 4, the wrist flip gesture includes a plurality of hand movements. Specifically, the initial action 407 of the wrist flip gesture may be that the five fingers are opened naturally and remain unchanged in a horizontal state, an intermediate gesture 408 may be a gesture that flips about 90 degrees towards the outside of the user's body, and the end gesture may be that the five fingers are opened or relaxed in any relaxed state.

The foregoing embodiments are merely examples given with a preset tilt angle of 0 degrees (that is, a horizontal state). In an example, the initial action or the end action of the user gesture mentioned above may not be a gesture in a horizontal state, but may be another state in which the user gesture is at a preset tilt angle with the horizontal plane. This is not limited in embodiments of this application.

As described above, in the method, different operations may be performed based on different user gestures. After enabling gesture recognition, the wearable device may perform a specific control operation on a specific application, or perform a shortcut operation on the wearable device using some specific gestures.

In an optional embodiment, when the wearable device plays music, the user gesture may include a fist clenching and unclenching gesture and a wrist flip gesture, and a corresponding operation may include a song switching operation and a song pause operation. That is, when the wearable device is playing a song, after enabling gesture recognition, the wearable device may pause playing the song if the wearable device recognizes the fist clenching and unclenching gesture; or when the wearable device is playing a song, after enabling gesture recognition, the wearable device may switch the song if the wearable device recognizes the wrist flip gesture.

In an optional embodiment, when the wearable device receives an incoming call, the user gesture may include a fist clenching and unclenching gesture and a wrist flip gesture, and a corresponding operation may include a mute operation/ a hang-up operation or an answer operation on the incoming call. In other words, when the wearable device receives an incoming call, after enabling gesture recognition, the wearable device may perform a mute operation/ a hang-up operation on the incoming call if the wearable device recognizes the wrist flip gesture; or when the wearable device receives an incoming call, after enabling gesture recognition, the wearable device may perform an answer operation on the incoming call if the wearable device recognizes the fist clenching and unclenching gesture.

In an optional embodiment, the wearable device may further separately set a user gesture for some specific operations. For example, a specific user gesture may be corresponding to "calling a payment interface". In this way, after enabling gesture recognition and recognizing the specific user gesture, the wearable device may call the payment interface. It should be noted that the specific operation may be customized based on a user requirement. This is not limited in this application.

In addition, after enabling gesture recognition, the wearable device may start an application that helps the user control the wearable device, for example, a voice assistant application. In an optional embodiment, the wearable device may start the voice assistant application using the specific user gesture. In an example, the finger rubbing gesture may be corresponding to start the voice assistant application. The wearable device may start the voice assistant application after recognizing the finger rubbing gesture. After receiving a user voice, the voice assistant application may perform a related operation based on the user voice. For example, after the voice assistant application is started, the user may send an instruction of "pausing music", and the voice assistant application may receive the instruction and perform an operation of pausing playing music based on the instruction. For another example, after the voice assistant application is started, the user may send an instruction of "opening a payment application", and the voice assistant application may receive the instruction and perform an operation of opening the payment application based on the instruction.

In conclusion, based on the method for controlling a wearable device in embodiments of this application, the specific operation can be performed after the specific user gesture is recognized, thereby improving user experience. Still further, in the control method, after the specific user gesture is recognized, a voice assistant application may be started to control the wearable device, to flexibly control the wearable device, thereby further expanding a use scenario of the user.

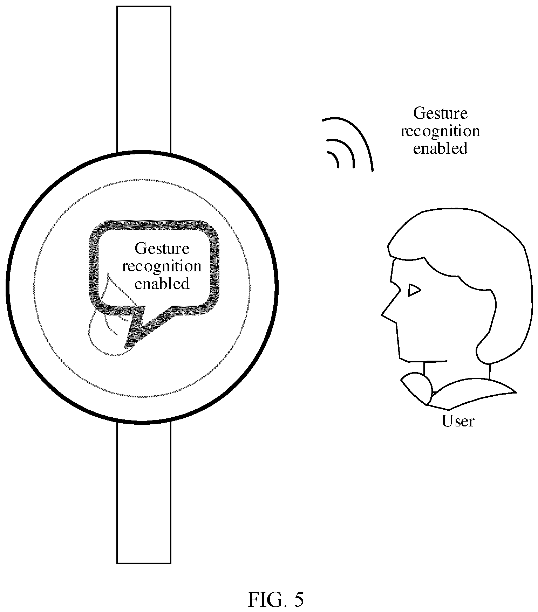

In addition, before step S330 is performed, the method for controlling a wearable device based on embodiments of this application may further remind the user that an operation may be performed on the wearable device using gesture recognition. As shown in FIG. 5, a display screen of the wearable device may remind the user using a text. For example, "gesture recognition has been enabled" may be displayed on the screen, or "a call may be answered by using a fist clenching and unclenching gesture or muted by using a wrist flip gesture" may be displayed in a call scenario, or "a next song may be played by using a wrist flip gesture" may be displayed in a music scenario. In addition, the wearable device may further remind the user using a voice. For example, the wearable device may use the voice to remind the user that "gesture recognition has been enabled", or use the voice in a call scenario to remind the user that "a call may be answered by using a fist clenching and unclenching gesture or muted by using a wrist flip gesture", or use the voice in a music scenario to remind the user that "a next song may be played by using a wrist flip gesture". Then, the user may control the wearable device using the gesture shown in FIG. 4.

It can be learned from FIG. 5 that, to prevent the user from not knowing or forgetting to use gesture recognition, the method for controlling a wearable device according to embodiments of this application may remind the user of using the gesture recognition before enabling the gesture recognition. In addition, the wearable device may further remind the user of how to specifically use the gesture recognition to perform an operation on the wearable device (for example, which gesture corresponds to which operation), so that the user can quickly and in a timely manner perform the operation on the wearable device using the gesture recognition. In addition, in the related technology, even if the user knows how to control the wearable device using a gesture, the user needs to perform a multi-step operation when the wearable device is already touched abnormally to enable gesture recognition. This is very difficult in actual use. According to embodiments of this application, gesture recognition may be directly enabled after the user is reminded to use the gesture recognition, thereby reducing user operations and improving user experience.

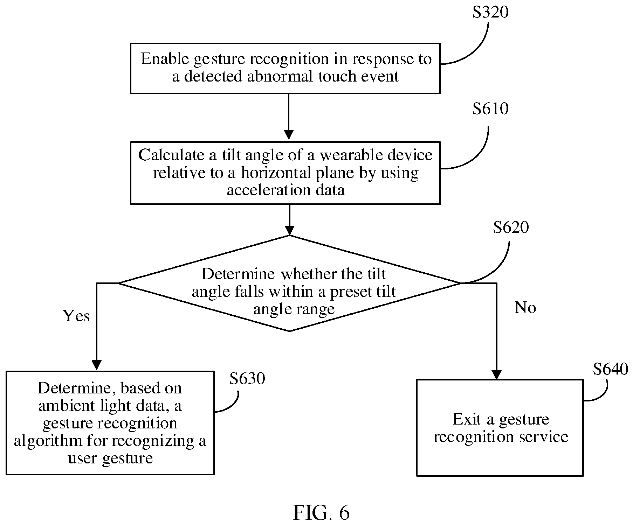

Based on the foregoing description, the following specifically describes, with reference to FIG. 6, how to recognize a user gesture in embodiments of this application. FIG. 6 is a step flowchart of recognizing a user gesture according to an embodiment of this application.

Step S610. Calculate a tilt angle of the wearable device relative to a horizontal plane by using acceleration data. During implementation, accelerometer (accelerometer, ACC) data may be obtained by using a triaxial ACC, and then the tilt angle of the wearable device is determined by using the ACC data.

During implementation, the ACC data may be processed in a same manner as the PPG data. Specifically, the ACC data may be collected based on a preset frequency, and the collected ACC data is processed into a waveform whose time length is T based on a set step. For example, when T is 2 seconds and the preset frequency is 100 Hz, a data length is 200 sampling points. If the step is set to 0.1 second, that is, a backward sliding window is performed every 10 sampling points, a waveform with a length of 2 seconds may be generated every 0.1 second.

In this process, due to an error, the waveform may be longer or shorter than 2 seconds. In other words, the data length may be greater than 200 sampling points or less than 200 sampling points. Based on this, in the method, whether obtained ACC data meets a preset duration may be determined. If the obtained ACC data is greater than the preset duration, only the ACC data of the preset duration may be selected. If the obtained ACC data is less than the preset duration, the ACC data may be increased until the preset duration is met.

Optionally, in the method, band-pass filtering processing may be performed on the ACC data, to filter out a high frequency component and a low frequency component in the ACC data. Then, an average amplitude of the ACC data may be calculated as ACC feature data, and step S610 is performed by using the ACC feature data.

In step S620, determine whether the tilt angle falls within a preset tilt angle range, where the preset tilt angle range refers to a range in which the preset tilt angle in an initial state is a center. For example, if the preset tilt angle in the initial state is 90 degrees, the preset tilt angle range may indicate from 80 degrees to 100 degrees.

In this step, whether the initial state meets an initial state of a preset user gesture is determined by using the tilt angle. For example, when the preset tilt angle range falls within a range centered on a preset tilt angle of 0 degrees, tilt angles of the gesture 401 in the finger rubbing gesture in (a) in FIG. 4, the fist clenching and unclenching gesture 404 in (b) in FIG. 4, and the wrist flip gesture 407 in (c) in FIG. 4 are all 0 degrees. Therefore, tilt angles of the gestures fall within the preset tilt angle range. Therefore, the wearable device may continue to recognize the user gesture. On the contrary, if the tilt angle calculated in step S610 does not meet the preset tilt angle range, it indicates that the initial state of the user gesture does not meet the requirement, that is, the user gesture is not a preset user gesture, and subsequent gesture recognition is not performed.

Still take the preset tilt angle of 0 degrees as an example. In actual use, there may be the following case: The user gesture made by the user is not an initial action made when the arm wearing the wearable device is in the horizontal state. However, the user makes the initial action when the arm wearing the wearable device is in the horizontal state in subsequent adjustment. Based on this, when it is determined in step S620 that the tilt angle does not meet the preset tilt angle range, the foregoing operations may be repeated at a preset interval (for example, 1 second) until a preset time length is reached. Then, it may be determined that the user does not make a valid gesture within a specified time, and step S640 may be performed. The wearable device exits gesture recognition and no longer recognizes the gesture. The preset time length may be set by a skilled person. The wearable device performs effective gesture recognition only when it is determined that the tilt angle falls within the preset tilt angle range in step S620.

When it is determined in step S620 that the tilt angle falls within the preset tilt angle range, in the method, step S630 may be further performed: determining, based on ambient light data collected by an ambient light sensor, a gesture recognition algorithm for recognizing the user gesture.

The ambient light data may indicate data obtained by using the ambient light sensor to receive light of each wavelength in an environment, and the data may help determine whether light of a wearing environment of the wearable device is robust. In embodiments of this application, the wearable device may use different gesture recognition algorithms based on different ambient light data. This is because when the ambient light is not strong (for example, in an indoor environment), the PPG sensor can obtain the PPG data used for gesture recognition. A gesture effect recognized by the PPG data is good and a signal-to-noise ratio is high. On the contrary, if the ambient light is strong, the PPG sensor may not be able to obtain the PPG data used for gesture recognition due to the ambient light. Therefore, the ambient light data may be used for gesture recognition.

In conclusion, based on the method for controlling a wearable device in embodiments of this application, after enabling gesture recognition, ACC data may be further used to determine whether the tilt angle in the initial state of the wearable device is correct. If the tilt angle is incorrect, gesture recognition is directly exited, and a specific user gesture is recognized after the tilt angle is correct. In this manner, a gesture made by the user can be preliminarily screened, and only a valid gesture is recognized, thereby reducing a calculation amount of the wearable device.

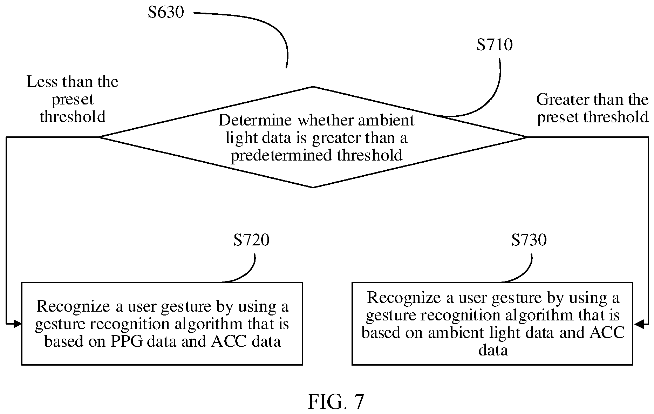

The following describes step S630 in detail with reference to FIG. 7.

In step S710, it is determined whether ambient light data is greater than a predetermined threshold. The ambient light data may be processed in a same manner as the PPG data and the ACC data. Specifically, the ambient light data may be collected based on a preset frequency, and the collected ambient light data is processed into a waveform whose time length is T based on a set step. For example, when T is 2 seconds and the preset frequency is 100 Hz, a data length is 200 sampling points. If the step is set to 0.1 second, that is, a backward sliding window is performed every 10 sampling points, a waveform with a length of 2 seconds may be generated every 0.1 second.

In this process, due to an error, the waveform may be longer or shorter than 2 seconds. In other words, the data length may be greater than 200 sampling points or less than 200 sampling points. Based on this, in the method, whether obtained ambient light data meets a preset duration may be determined. If the obtained ambient light data is greater than the preset duration, only the ambient light data of the preset duration may be selected. If the obtained ambient light data is less than the preset duration, the ambient light data may be increased until the preset duration is met.

Optionally, in the method, band-pass filtering processing may be performed on the ambient light data, to filter out a high frequency component and a low frequency component in the ambient light data. Subsequently, an average amplitude of the ambient light data may be calculated as ambient light data, and whether the ambient light data is greater than a preset threshold is determined, where the preset threshold may be a value set by a skilled person based on experience.

If the ambient light data is less than the preset threshold, step S720 may be performed to recognize a user gesture by using a gesture recognition algorithm that is based on PPG data and ACC data. For ease of description, the algorithm is referred to as a first user gesture recognition algorithm for short. If the ambient light data is greater than the preset threshold, step S730 may be performed to recognize a user gesture by using a gesture recognition algorithm that is based on ambient light data and ACC data. For ease of description, the algorithm is referred to as a second gesture recognition algorithm.

It should be noted that the PPG data mentioned herein may be different from the foregoing PPG data used to determine whether the user wears the wearable device on the arm. In an optional embodiment, in the method, PPG data for different purposes may be obtained by transmitting light of different wavelengths via a PPG sensor. For example, the PPG data in step S720 may be data that is obtained by using infrared light transmitted by the PPG sensor and that is used for gesture recognition. In addition, the PPG sensor may transmit green light to obtain the PPG data used to determine whether the user wears the wearable device.

In embodiments of this application, both the first user gesture recognition algorithm and the second gesture recognition algorithm are algorithms for recognizing a gesture by using artificial intelligence (artificial intelligence, AI) technologies.

The AI technologies may include a model training process and a model inference (or prediction) process. To obtain data (training data) for training a model, the AI technologies may further include a data collection (or collection) process. The AI technologies involved in embodiments of this application may be implemented by using a model such as a machine learning (machine learning, ML) model or a deep learning (deep learning, DL) model. The AI technologies may train a model using training data in a data-driven manner, and endow a machine with a specific capability, so that the machine can implement a function that is difficult to implement only by direct programming (for example, manually designing a rule by programming, manually constructing a feature, and the like). In machine learning, a machine may train or learn collected training data to obtain an AI model. In embodiments of this application, the AI model may be referred to as a model, a machine learning model, an Al/ ML model, or another name. This is not limited.

With reference to the purpose of gesture recognition in embodiments of this application, for the first user gesture recognition algorithm, in the method, a first feature vector may be generated by using the PPG data and the ACC data. The first feature vector is used as an input of a first AI model, and the first feature vector is processed by a trained first AI model, to output a specific gesture.

For the second gesture recognition algorithm, in the method, a second feature vector may be generated by using the ambient light data and the ACC data. The second feature vector is used as an input of a second AI model, and the second feature vector is processed by a trained second AI model, to output a specific gesture.

The following further describes a process of generating a feature vector (including the first feature vector and the second feature vector).

To generate the first feature vector, the following processing may be performed on the foregoing obtained ACC data (that is, raw ACC data) and PPG data (that is, raw PPG data):
(1) performing normalization processing on the raw ACC data and the raw PPG data to form normalized ACC data and normalized PPG data;
(2) performing frequency-domain transformation on the raw ACC data and the raw PPG data respectively to form ACC frequency-domain data and PPG frequency domain data;
(3) performing time-frequency transformation (wavelet transformation) on the raw ACC data and the raw PPG data to form ACC time-frequency data and PPG time-frequency data; and
(4) performing correlation transformation between the raw PPG data and the raw ACC data to form ACC-PPG related data.

Finally, a plurality of data waveforms (multi-dimensional data waveforms) of the raw ACC data, the normalized ACC data, the ACC frequency-domain data, the ACC time-frequency data, the raw PPG data, the normalized PPG data, the PPG frequency-domain data, the PPG time-frequency data, and the ACC-PPG related data may be obtained. Feature information is extracted from each (each dimension of) data waveform, and several extracted features jointly form a group of feature vectors. The extracted feature data includes but is not limited to a feature of data, such as an average value, a standard deviation, a waveform factor, a peak-to-peak value, a gradient, skewness, waveform short-time energy, a short-time average amplitude difference, an energy entropy, an autocorrelation coefficient, an approximate entropy, an average absolute deviation, a cliff, a power spectral density, and spectral data. The feature data is spliced to form the first feature vector.

To generate the second feature vector, the following processing may be performed on the foregoing obtained ACC data (that is, raw ACC data) and ambient light data (that is, raw ambient light data):
(1) performing normalization processing on the raw ACC data and the raw ambient light data to form normalized ACC data and normalized ambient light data;
(2) performing frequency-domain transformation on the raw ACC data and the raw ambient light data respectively to form ACC frequency-domain data and ambient light frequency domain data;
(3) performing time-frequency transformation (wavelet transformation) on the raw ACC data and the raw ambient light data to form ACC time-frequency data and ambient light time-frequency data; and
(4) performing correlation transformation between the raw ambient light data and the raw ACC data to form ACC-ambient light related data.

Finally, a plurality of data waveforms (multi-dimensional data waveforms) of the raw ACC data, the normalized ACC data, the ACC frequency-domain data, the ACC time-frequency data, the raw ambient light data, the normalized ambient light data, the ambient light frequency-domain data, the ambient light time-frequency data, and the ACC-ambient light related data may be obtained. Feature information is extracted from each (each dimension of) data waveform, and several extracted features jointly form a group of feature vectors. The extracted feature data includes but is not limited to a feature of data, such as an average value, a standard deviation, a waveform factor, a peak-to-peak value, a gradient, skewness, waveform short-time energy, a short-time average amplitude difference, an energy entropy, an autocorrelation coefficient, an approximate entropy, an average absolute deviation, a cliff, a power spectral density, and spectral data. The feature data is spliced to form the second feature vector.

Then, the generated first feature vector and second feature vector may be respectively input into the trained first AI model and the trained second AI model. During implementation, a person skilled in the art may first determine to-be-used AI models, and model parameters of these AI models are all default values. Therefore, training data needs to be used to determine model parameters applicable to embodiments of this application. In other words, in a training process, each model parameter forming the AI model is continuously adjusted, to obtain a final model parameter.

The training data may include a training feature vector of a specific gesture and corresponding training label information (for example, a finger is rubbed or a fist is held). In this way, in the training process, the model parameter may be adjusted based on a correspondence until a preset requirement is met. In addition, to better recognize a user gesture, the training feature vector of the first AI model or the second AI model may correspond to a finger rubbing gesture, a fist clenching and unclenching gesture, a wrist flip gesture, or another gesture, where the another gesture may indicate another gesture different from the finger rubbing gesture, the fist clenching and unclenching gesture, and the wrist flip gesture.

Optionally, the first AI model or the second AI model may be a machine learning algorithm, including a random forest algorithm, a decision tree algorithm, a support vector machine algorithm, a K-nearest neighbor algorithm, and the like. In another optional manner, the first AI model or the second AI model may be a deep learning network algorithm, including a multi-layer neural network model. The multi-layer neural network model may include a convolution layer, a pooling layer, a fully connected layer, and another network module.

During implementation, after step S720 or step S730 is performed, a specific operation may be controlled via a recognized gesture. In other words, the wearable device may determine the recognized gesture as different control data, and then control the wearable device using the control data. For example, after recognizing the finger rubbing gesture, the wearable device determines control data corresponding to the finger rubbing gesture, and enables the wearable device to perform a mute operation using the control data. For another example, after recognizing the fist clenching and unclenching gesture, the wearable device determines control data corresponding to the fist clenching and unclenching gesture, and pauses playing songs using the control data.

In conclusion, based on the method for controlling a wearable device in embodiments of this application, it may be determined, based on the ambient light data, whether light of a wearing environment of the wearable device is robust, and then different gesture recognition algorithms are used based on different light, thereby improving gesture recognition accuracy. Further, in a process of determining the user gesture, the AI model may be used to determine the user gesture, and an invalid gesture of a non-specific gesture may be further determined, thereby improving the gesture recognition accuracy.

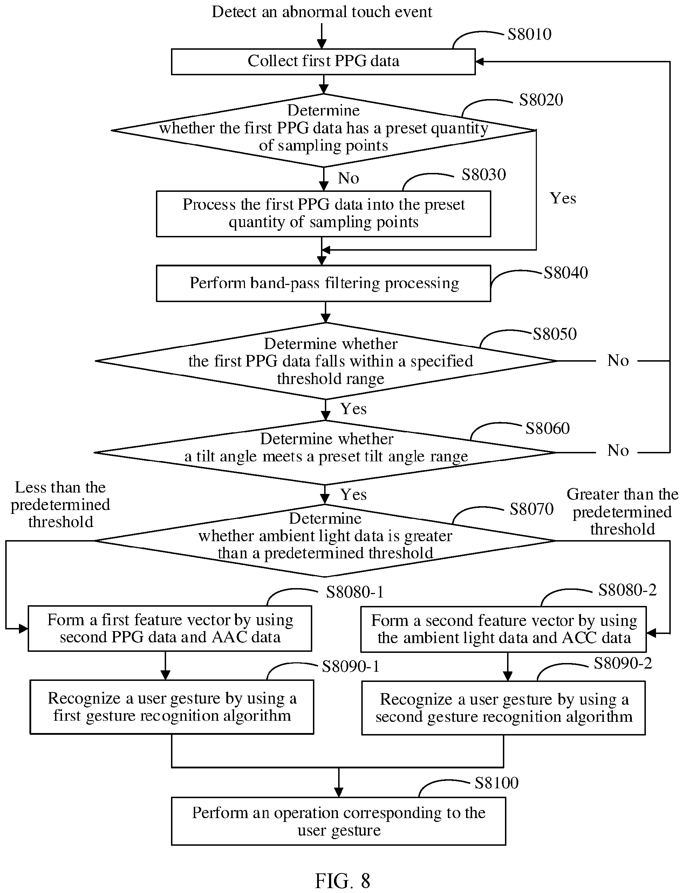

FIG. 8 is another step flowchart of a method for controlling a wearable device according to an embodiment of this application.

After detecting an abnormal touch event, the wearable device may perform the step flowchart shown in FIG. 8. Specifically, in step S8010, first PPG data is collected. During implementation, the wearable device may collect the first PPG data based on a preset frequency and a preset step using light (for example, green light) of a first wavelength in a PPG sensor.

Then, in step S8020, it is determined whether the first PPG data has a preset quantity of sampling points (for example, 200 sampling points). If the PPG has the preset quantity of sampling points, step S8040 is performed on the first PPG data, that is, band-pass filtering processing is performed on the first PPG data. If the first PPG data does not have the preset quantity of sampling points (for example, the quantity of sampling points is greater than the preset quantity of sampling points or is less than the preset quantity of sampling points), step S8030 is performed and then step S8040 is performed. In other words, step S8030 is performed to process the first PPG data into the preset quantity of sampling points, and then step S8040 is performed to perform the band-pass filtering processing on the first PPG data. Specific operations are described in the foregoing content, and details are not described herein again.

In step S8050, it is determined whether the first PPG data falls within a specified threshold range. This step is used to determine whether a user wears the wearable device. Specific operations are described in the foregoing content, and details are not described herein again.

In actual use, there may be the following case: when an abnormal touch event occurs on the wearable device, the user does not wear the wearable device, but the user then wears the wearable device on an arm and expects to perform an operation on the wearable device using gesture recognition. Based on this, if it is determined in step S8050 that the first PPG data does not fall within the preset range, steps S8010 to S8040 may be repeatedly performed at a preset interval (for example, 1 second).

If it is determined in step S8050 that the first PPG data falls within the specified threshold range, step S8060 is performed to determine whether a tilt angle of an initial state meets a preset tilt angle range. In this step, to more effectively recognize a user gesture, specific operations are described in the foregoing content, and details are not described herein again.

In actual use, there may be the following case: The tilt angle of the initial state made by the user does not meet the preset tilt angle range. For example, the user gesture made by the user is not a gesture made in a horizontal state, but the tilt angle of the initial state in subsequent adjustment meets the preset tilt angle range. Based on this, when it is determined in step S8060 that the tilt angle does not meet the preset tilt angle range, steps S8010 to S8050 may be repeatedly performed at a preset interval (for example, 1 second) until a predetermined time length is reached.

If it is determined in step S8060 that the tilt angle meets the preset tilt angle range, step S8070 is performed to determine whether ambient light data is greater than a predetermined threshold. If it is determined that the ambient light data is less than the predetermined threshold, step S8080-1 is performed to form a first feature vector by using second PPG data and ACC data, where the second PPG data is data obtained by using light (for example, infrared light) of a second wavelength; and step S8090-1 is performed to recognize the user gesture by using a first user gesture recognition algorithm.

If it is determined that the ambient light data is greater than the predetermined threshold, step S8080-2 is performed to form a second feature vector by using the ambient light data and ACC data, and step S8090-2 is performed to recognize the user gesture by using a second gesture recognition algorithm. Specific operations are described in the foregoing content, and details are not described herein again.

Finally, step S8 100 is performed to perform an operation corresponding to a recognized user gesture. Specific operations are described in the foregoing content, and details are not described herein again.

In conclusion, based on the method for controlling a wearable device in embodiments of this application, after an abnormal touch event is detected, whether the user wears the wearable device on the arm may be determined by using the first PPG data. The wearable device can recognize the gesture made by the user only when the wearable device is worn on the arm of the user. Further, in the method, whether the user gesture conforms to a preset initial state may be determined by using the tilt angle, and if the initial state does not conform to the preset initial state, gesture recognition is stopped, thereby improving recognition efficiency of the wearable device and reducing unnecessary recognition operations. Still further, in the method, the ambient light data is used to determine whether light of a wearing environment of the wearable device is robust, and the wearable device may use different gesture recognition algorithms based on different light of the wearing environment, thereby improving accuracy of gesture recognition.

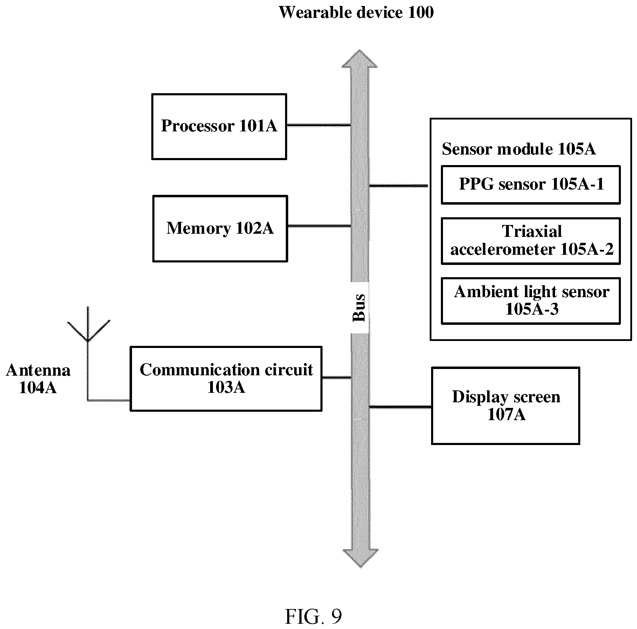

FIG. 9 is a schematic structural diagram of a wearable device according to an embodiment of this application.

It may be understood that, in embodiments of this application, a smartwatch is used as an example for description, but is not limited to the smartwatch, and may be another wearable device (for example, a smart band or a smart ring) worn on a wrist. This is not limited in embodiments of this application.

As shown in FIG. 9, the wearable device 100 may include a processor 101A, a memory 102A, a communication circuit 103A, an antenna 104A, a sensor module 105A, and a display screen 107A. Specifically:

The processor 101A may be configured to read and execute computer-readable instructions. During specific implementation, the processor 101A may mainly include a controller, an arithmetic unit, and a register. The controller is mainly responsible for instruction decoding, and sending control data for an operation corresponding to the instructions. The arithmetic unit is mainly responsible for storing a register operand, an intermediate operation result, and the like that are temporarily stored during instruction execution. During specific implementation, a hardware architecture of the processor 101A may be an application-specific integrated circuit (ASIC) architecture, an MIPS architecture, an ARM architecture, an NP architecture, or the like.

In some embodiments, the processor 101A may be configured to parse data received by the communication circuit 103 A.

The memory 102A is coupled to the processor 101A, and is configured to store various software programs and/or a plurality of sets of instructions. During specific implementation, the memory 102A may include a high-speed random access memory, or may include a non-volatile memory, for example, one or more magnetic disk storage devices, a flash memory, or another non-volatile solid-state storage device. The memory 102A may store an operating system, for example, an embedded operating system such as uCOS, VxWorks, or RTLinux. The memory 102A may further store a communication program, and the communication program may be used to communicate with another device.

The communication circuit 103 A may provide a solution applied to the wearable device 100 for wireless communications including a WLAN (for example, a Wi-Fi network), a BR/EDR, a BLE, a GNSS, an FM, and the like.

In some other embodiments, the communication circuit 103A may also transmit data, so that another device can discover the wearable device 100.

A wireless communication function of the wearable device 100 may be implemented by the communication circuit 103A, the antenna 104A, a modem processor, and the like.

The antenna 104A may be configured to transmit and receive electromagnetic wave data. Each antenna in the wearable device 100 may be configured to cover one or more communication frequency bands. In some embodiments, there may be a plurality of antennas 104A of the communication circuit 103A.

The wearable device 100 may further include a sensor module 105A. The sensor module 105A may sense a change inside or around the wearable device 100, and convert the change into electrical data for use by the wearable device 100. The sensor module 105A may include a PPG sensor 105A-1, a triaxial accelerometer 105A-2, and an ambient light sensor 105A-3. In addition, the sensor module 150A may further include another sensor, for example, an altimeter or an optical heart rate sensor. This is not limited in this application.

The wearable device 100 may further include a display screen 107A. The display screen 107A may be configured to display an image, prompt information, and the like. The display screen may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like. The display screen 107A may further detect a touch operation of a user.

In an example, the display screen 107A includes a touch panel and a display panel. The display panel may be located at a bottommost layer of the display screen, and the touch panel may be located at an uppermost layer of the display screen. The touch panel may also be referred to as a touch sensor, and the display screen 107A may also be referred to as a touchscreen or a touch panel. The touch panel may transmit the detected touch operation to the processor 101A, to determine a touch event type (for example, an abnormal touch event in this application), and may display an interface related to the touch operation (for example, the interface shown in FIG. 5) on the display screen 107A.

It should be noted that, in the method provided in embodiments of this application, an implementation sequence of steps is not limited, and a person skilled in the art may adjust the implementation sequence of the steps based on a specific requirement, or combine the steps in embodiments provided in this application to form an implementation method that can be applied, without going beyond the coverage scope of embodiments of this application.

Embodiments of this application provide a wearable device, including a processor and a memory that is configured to store executable instructions of the processor, where the processor is configured to implement the foregoing method when executing the instructions.

Embodiments of this application provide a non-volatile computer-readable storage medium. Computer program instructions are stored on the non-volatile computer-readable storage medium. When the computer program instructions are executed by a processor, the foregoing method is implemented.

Embodiments of this application provide a computer program product, including computer-readable code or a non-volatile computer-readable storage medium carrying the computer-readable code. When the computer-readable code is run on a processor of an electronic device, the processor in the electronic device performs the foregoing method.

The computer-readable storage medium can be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination of the above. More specific examples (non-exhaustive list) of computer-readable storage media include: a portable computer disk, a hard disk, a random access memory (Random Access Memory, RAM), a read-only memory (Read Only Memory, ROM), an erasable programmable read-only memory (Electrically Programmable Read-Only-Memory, EPROM, or a flash memory), a static random access memory (Static Random-Access Memory, SRAM), a portable compact disk read-only memory (Compact Disc Read-Only Memory, CD-ROM), a digital multi-function disk (Digital Video Disc, DVD), a memory stick, a floppy disk, a mechanical coding device, for example, a punched card or an in-groove protrusion structure on which stores instructions, and any suitable combination thereof.

Computer-readable program instructions or code described herein can be downloaded to respective computing/processing devices from a computer-readable storage medium or to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions for performing the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming language includes an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer through any kind of network, including a local area network (Local Area Network, LAN) or a wide area network (Wide Area Network, WAN), or may be connected to an external computer (for example, using an Internet service provider to connect through the Internet). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or the block diagrams.

The computer-readable program instructions may alternatively be loaded onto a computer, another programmable data processing apparatus, or another device so that a series of operation steps is performed on the computer, the another programmable data processing apparatus, or the another device to produce a computer-implemented process. Therefore, the instructions executed on the computer, the another programmable data processing apparatus, or the another device implements the functions/actions specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagram and/or the flowchart, and a combination of blocks in the block diagram and/or the flowchart may be implemented by hardware (for example, a circuit or an application-specific integrated circuit (Application-Specific Integrated Circuit, ASIC)) that performs a corresponding function or action, or may be implemented by a combination of hardware and software, for example, firmware.

Although the present invention is described with reference to the embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are merely an example, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of the embodiments, practical applications, or improvements to technologies in the market, or to enable other people of ordinary skill in the art to understand the embodiments disclosed herein.

## Claims

1. A method for controlling a wearable device, comprising:
detecting an abnormal touch event on a display screen of the wearable device; and
if the wearable device is worn on an arm of a user, enabling gesture recognition in response to the detected abnormal touch event.

2. The method according to claim 1, wherein after the enabling gesture recognition, the method further comprises:
recognizing a first user gesture made by the user; and
performing a first operation corresponding to the first user gesture.

3. The method according to claim 2, wherein the abnormal touch event indicates that an abnormal event exists on a touch point and/or a touch track detected on the display screen.

4. The method according to claim 2 or 3, wherein an initial state of the first user gesture is an initial action starting from a preset tilt angle relative to a horizontal plane.

5. The method according to any one of claims 2 to 4, wherein after the enabling gesture recognition, the method further comprises:
recognizing a second user gesture made by the user, wherein the second user gesture is different from the first user gesture, and an initial state of the second user gesture is an initial action starting from the same preset tilt angle as the initial state of the first user; and
performing a second operation corresponding to the second user gesture.

6. The method according to any one of claims 2 to 5, wherein after the enabling gesture recognition, the method further comprises:
determining whether a preset user gesture is recognized within a preset time period, wherein the preset user gesture comprises the first user gesture; and
exiting the gesture recognition if the preset user gesture is not recognized within the preset time period.

7. The method according to any one of claims 2 to 6, wherein before the recognizing a first user gesture made by the user, the method further comprises:
calculating a tilt angle of the wearable device relative to the horizontal plane by using acceleration data;
determining whether the tilt angle falls within a preset tilt angle range; and
recognizing the first user gesture if the tilt angle falls within the preset tilt angle range.

8. The method according to any one of claims 2 to 7, wherein the recognizing a first user gesture made by the user comprises:
determining, based on ambient light data, a gesture recognition algorithm for recognizing the first user gesture; and
recognizing the first user gesture by using the determined gesture recognition algorithm.

9. The method according to claim 8, wherein the determining, based on ambient light data, a gesture recognition algorithm for recognizing the first user gesture comprises:
determining whether the ambient light data is greater than a preset threshold; and
if the ambient light data is greater than the preset threshold, recognizing the first user gesture by using a gesture recognition algorithm that is based on ambient light data and acceleration data; or
if the ambient light data is lower than the preset threshold, recognizing the first user gesture by using a gesture recognition algorithm that is based on photo plethysmo graphic data and acceleration data.

10. The method according to any one of claims 2 to 9, wherein the method further comprises:
determining whether photo plethysmo graphic data falls within a preset range; and
if the photo plethysmo graphic data falls within the preset range, determining that the wearable device is worn on the arm of the user.

11. The method according to any one of claims 2 to 10, wherein the first user gesture comprises a wrist flip gesture, a fist clenching and unclenching gesture, or a finger rubbing gesture.

12. The method according to any one of claims 2 to 11, wherein the performing a first operation corresponding to the first user gesture comprises:
when the wearable device displays an incoming call, performing a mute operation, a hang-up operation, or an answer operation on the incoming call.

13. The method according to any one of claims 2 to 11, wherein the performing a first operation corresponding to the first user gesture comprises:
when the wearable device plays a song, performing a switching operation or a pause operation on the played song.

14. The method according to any one of claims 2 to 11, wherein the performing a first operation corresponding to the first user gesture comprises:
starting a voice assistant application of the wearable device; or
calling a payment interface.

15. A wearable device, comprising:
a processor; and
a memory, configured to store instructions that can be executed by the processor, wherein
the processor is configured to implement the method for controlling a wearable device according to any one of claims 1 to 14 when executing the instructions.

16. A non-volatile computer-readable storage medium, storing computer program instructions, wherein when the computer program instructions are executed by a processor, the method for controlling a wearable device according to any one of claims 1 to 14 is implemented.

17. A computer program product, wherein when the computer program product is run on a computer, the computer is enabled to perform the method for controlling a wearable device according to any one of claims 1 to 14.
